# EUROPEAN PATENT SPECIFICATION

(11) **EP 2 044 351 B1**
(45) Date of publication and mention of the grant of the patent: **26.12.2012**
(21) Application number: 07711727.3
(22) Date of filing: 01.03.2007
(51) Int. Cl.: F16J 15/32

(54) **METHOD FOR THE PRODUCTION OF A SEAL**
VERFAHREN FÜR DIE HERSTELLUNG EINER DICHTUNG
PROCÉDÉ DE FABRICATION D'UN JOINT D'ÉTANCHÉITÉ

(30) Priority: 20.07.2006 DE 102006034056
(43) Date of publication of application: 08.04.2009
(73) Proprietor: Carl Freudenberg KG, 69469 Weinheim (DE)
(72) Inventor: LUTAUD, Dominique, F-52360 Orbigny au Mont (FR); SITARZ, Marc, F-52200 Langres (FR)
(74) Representative: Mattausch, Klaus
(86) International application number: PCT/EP2007/001750
(87) International publication number: WO 2008/009317

(56) References cited:
- EP-A- 1 593 886
- EP-A- 1 628 051
- EP-A1- 0 895 009
- DE-A1- 4 114 071
- DE-U1-202004 004 317
- JP-A- 2004 068 889
- US-A1- 2005 098 959

## Description

### Technical Field

The invention concerns a method for the production of a seal, comprising a seal element and an L-shaped supporting body that has an annular element and a disc-shaped flange, the flange having an end face on the side facing away from the element.

### Prior Art

Seals of this kind are in general of known art. Seals of known art consist of a support body made of metal and a disc-shaped seating element made of PTFE. The sealing element is secured to the support body by means of an intermediate layer made of a polymer material. Seals of this kind thus consist of at least three materials. Moreover the sealing element is configured such that the support body and also the contact face to which the sealing element with the intermediate layer is connected, as a result of which production is resource intensive. In certain configurations the medium that is being sealed can make contact with the support body or the contact face. This is then a problem, if the medium that is being sealed is chemically aggressive. Moreover seals of this kind are resource-intensive to produce.

US 2003/0031828 A1 shows a seal comprising a seal element and an L- shaped supporting body that has an annular element and a disc-shaped flange, the flange having an end face on the Side facing away from the element.

### Presentation of the Invention

The object of the invention is to provide a cost-saving method for producing a seal.

This object is achieved with the features of Claim 1. The dependent claims refer to advantageous embodiments.

For the achievement of this object the method comprising the steps of:
- providing a pre-formed L-shaped support body having an annular element and a disc shaped flange, wherein the flange has an end face on the side facing away from the element,
- placing said body in a mould,
- providing a blank of a sealing element comprising a first and a second section and locating the same on the end face of the support body ,
- materially bonding the sealing element at the second section to the end face by applying pressure and introducing simultaneously a scavenge geometry into the first section of the sealing element by stamping.
The connection of the sealing element to the support body is made without an intermediate layer, so that an additional injection moulding process is eliminated.

In this manner production is particularly simple and cost-effective. In an advantageous embodiment the end face points in the direction of the space to be sealed, the sealing element then being located such that the side of the support body facing towards the space to be sealed is covered. Since in this embodiment only the sealing element forms a bounding surface with the space to be sealed, the medium to be sealed also makes contact only with the sealing element. The sealing element protects the support ring and also the contact face between the sealing element and the support body from contact with the medium to be sealed.

The sealing element is connected by means of material bonding with the support body. Material bonded connections are easily produced and require only a small design resource.

An adhesive layer can be present between sealing element and support body. The adhesive layer can be applied to either the bearing ring or the support ring. The adhesive joint can then be produced by the application of pressure, with or without the application of heat.

The sealing element is located on the support body such that a first section of the sealing element forms a dynamic sealing lip and a second section of the sealing element forms a static seal. Here the sealing element surrounds the support body such that after assembly the first section of the sealing element surrounds the shaft to be sealed and the second section provides the static seal between housing and support body. Here it is particularly advantageous that by means of the sealing element the configuration of the static seal location between housing and support body is fixed. In this manner the joint between support body and sealing element can be selected such that a trouble-free assembly is possible. The loadings occurring in operation are accommodated by the clamped joint of the sealing element between support ring and housing, and the sealing element is fixed in its location.

The sealing element can have a coating in the area of the second section. This coating can, for example, be a sealant. With small coating thicknesses these types of coatings improve the static sealing effect of the sealing element.

The sealing element can consist of a PTFE compound, which can also be reinforced with glass fibres. Moreover the use of a non-woven or felt material impregnated with a PTFE dispersion comes into consideration. PTFE is insensitive to a large number of chemically aggressive media and has a small friction coefficient. Since also the section of the sealing element forming the static seal is formed from PTFE the press-fitting of the seal into the housing to be sealed is simplified.

The support body can consist of a metallic material. Metallic materials are easy to form, so that support rings can be produced cost-effectively as stamped parts. In other embodiments the support body can also consist of plastic. Here for example complicated geometries can be produced by means of injection moulding.

The sealing element has scavenge grooves. The scavenge groove is configured in the area of the first section and with correct assembly points in the direction of the shaft to be sealed. The scavenge groove improves the dynamic sealing effect.

The sealing element can bulge out in the direction of the ambient environment. Seals of this kind are simple to assemble. No special assembly tools are required.

The sealing element can bulge out in the direction of the space to be sealed. Seals of this kind seal reliably, even at high pressures within the space to be sealed.

This invention enables advantageously to use the same support body and the same disc-shaped sealing element for seals with sealing lips showing in both directions. It is only necessary to arrange the scavange grooves of the sealing element on the support body so that they show towards the machine part (e.g. a shaft) which should be sealed.

The support body can comprise a holding device for a sensor.The holding device is arranged on the annular element on the free end. The holding device and the support body are formed as a one-piece part. The holding device comprises a spacer and a connecting member for fixing a sensor. The outcome of this embodiment is a sealing arrangement comprising a seal and a sensor with only a few parts namely a support body, a disc-shaped sealing element and a sensor.

### Short Description of the Drawings

In what follows some examples of embodiment of the seal in accordance with the invention are described in more detail with the aid of the figures. Thus, schematically in each case:
- Fig. 1: shows the seal in accordance with the invention;
- Fig. 2: shows an assembled seal with a sealing lip extended in the direction of the ambient environment;
- Fig. 3: shows an assembled seal with a sealing lip extended in the direction of the space to be sealed;
- Fig. 4: shows the production procedure for the seal in accordance with the invention;
- Fig. 5: shows a sealing arrangement with the seal and a sensor.

### Embodiment of the Invention

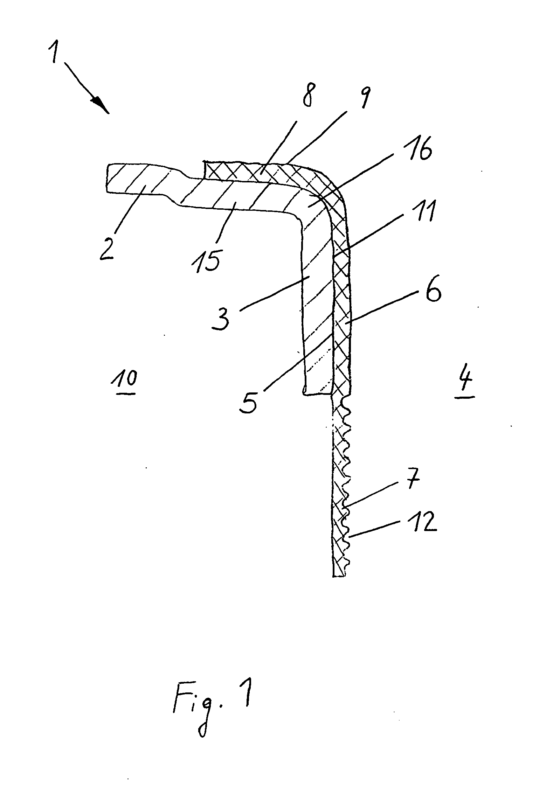

Figure 1 shows a seal 1, consisting of a support body 2 made of a metallic material and a sealing element 6 made of a glass fibre-reinforced PTFE compound. The L-shaped support body has an annular element 15 and a disc-shaped flange 16, the flange 16 having an end face 5 on the side facing away from the element 15. The sealing element 6 is materially bonded by means of an adhesive joint to the end face 5 of the support body 2. Here an adhesive layer 11 is present on the support body 2. The sealing element 6 is located on the support body 2 such that a first section 7 of the sealing element 6 forms a dynamic sealing lip and a second section 8 of the sealing element 6 forms a static seal. For improvement of the static sealing effect the sealing element 6 has a coating 9 in the form of a sealant in the area of the second section 8. In the area of the first section 7 the sealing element 6 has a scavenge geometry 12 in the form of scavenge grooves.

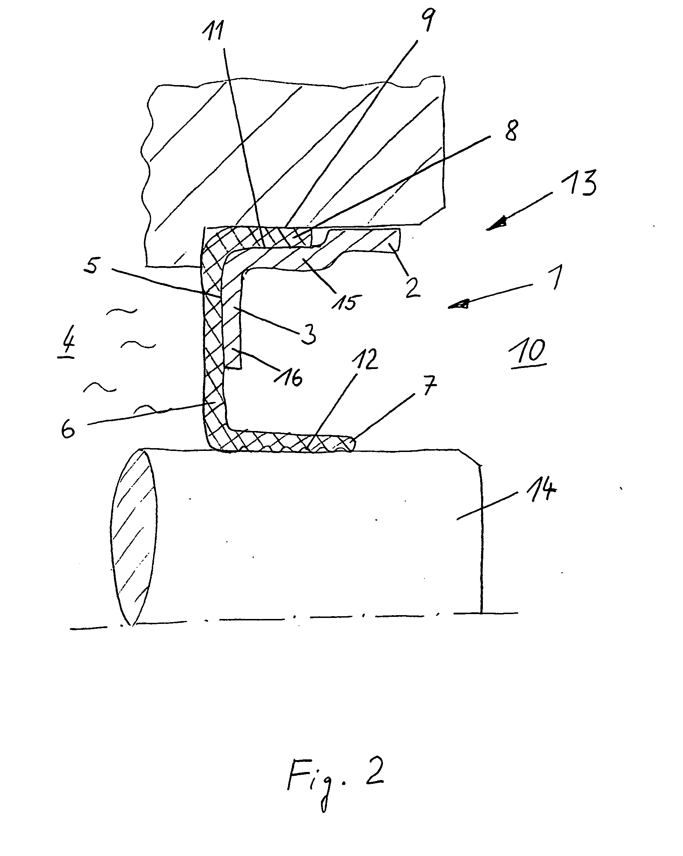

Figure 2 shows a seal configuration 13 with a seal 1, in accordance with Figure 1. The first section 7 of the sealing element 6 lies on the shaft 14 to be sealed, such that the sealing element 6 bulges out in the direction of the ambient environment 10. Here the end face 5 points in the direction of the space to be sealed 4 and the sealing element 6 is located such that the end face 5 of the support body 2 that is facing towards the space 4 to be sealed is covered, only the sealing element 6 forming a bounding surface with the space 4 to be sealed.

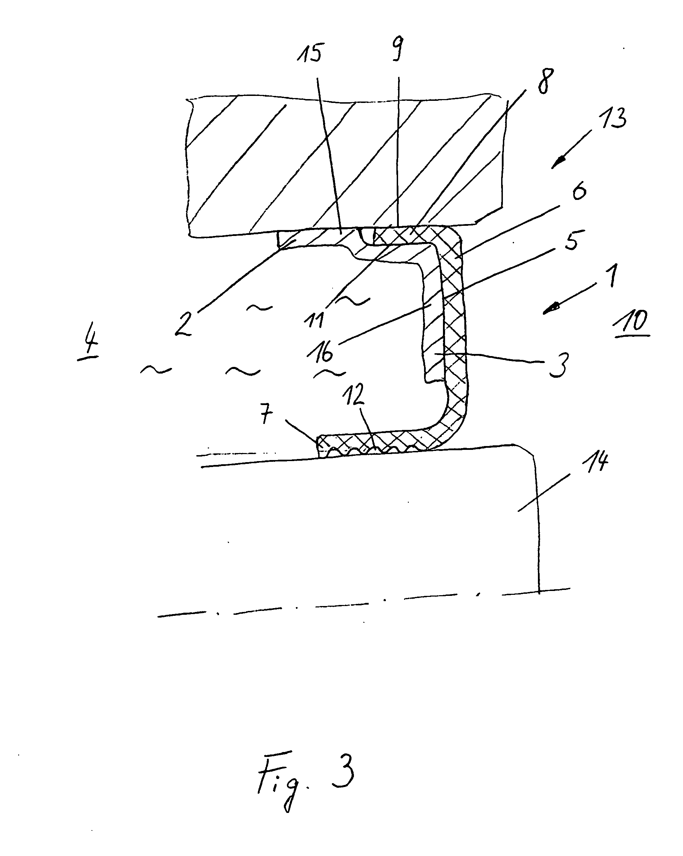

Figure 3 shows a seal configuration 13 with a seal 1, in accordance with Figure 1. The first section 7 of the sealing element 6 lies on the shaft 14 to be sealed, such that the sealing element 6 bulges out in the direction of the space to be sealed 4.

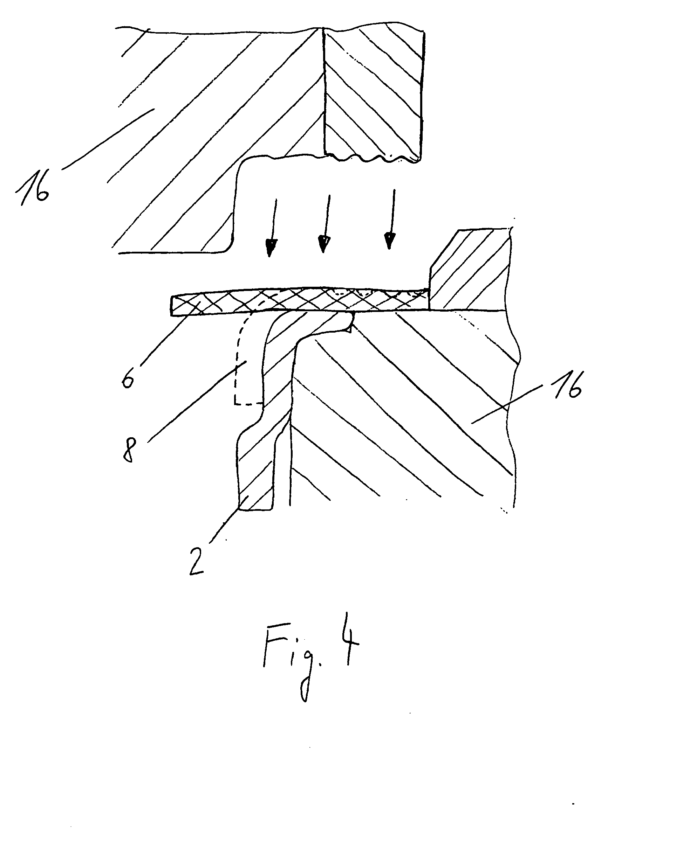

Figure 4 shows the production procedure for the seal 1 in accordance with the invention. For production a pre-formed support body 2 is placed in a mould 16 and a blank of a sealing element 6 is located on the end face 5 of the support body 2. The support body 2 has an adhesive layer 11. Next by the simultaneously application of pressure and stamping the sealing element 6 is materially bonded with the support body 2 and the scavenge geometry 12 is introduced into the first section 7 of the sealing element 6. The application of pressure can take place with or without the application of heat.

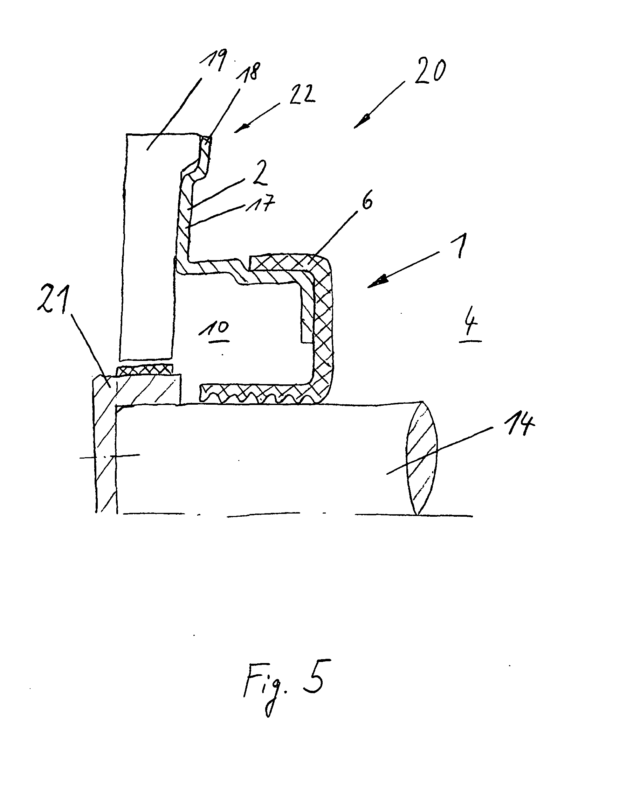

Figure 5 shows a sealing arrangement 20 with a seal 1 in accordance with Figure 1. In this embodiment the support body 2 further comprises a holding device 22, whereby the holding device 22 comprises a spacer 17 and a connecting member 18 for detachable fixing a sensor 19. The sensor 19 is fixed in the connecting member 18 by a snap fit. In other embodiments the sensor 19 is fixed by a screw fitting or by an adhesive joint. The encoder 21 which is detected by the sensor 19 is mounted on the shaft 14 which is sealed by the sealing element 6.

## Claims

1. Method for the production of a seal (1), comprising a sealing element (6) and an L-shaped support body (2) that has an annular element (15) and a disc shaped flange (16), wherein the flange (16) has an end face (5) on the side facing away from the element (15), wherein the sealing element (6) is located on the end face (5), wherein the sealing element (6) is located on the support body such that a first section (7) of the sealing element (6) forms a dynamic sealing lip and a second section (8) of the sealing element (6) forms a static seal, comprising the steps of:
- providing a pre-formed L-shaped support body (2) having an annular element (15) and a disc shaped flange (16), wherein the flange (16) has an end face (5) on the side facing away from the element (15),
- placing said body (2) in a mould (16),
- providing a blank of a sealing element (6) comprising a first and a second section (7, 8) and locating the same on the end face (5) of the support body (2),
- materially bonding the sealing element (6) at the second section (8) to the end face (5) by applying pressure and introducing simultaneously a scavenge geometry (12) into the first section (7) of the sealing element (6) by stamping.

2. Method according to claim 1, **characterized in that** the application of pressure takes place with the application of heat.

3. Method according to any of claims 1 or 2, **characterized in that** an adhesive layer (11) is applied to the support body (2) before bonding the sealing element (6) to it by applying pressure, with or without the application of heat.

4. Method according to any of claims 1 to 3, **characterized in that** the pre-formed support body (2) consists of a metallic stamped part.

5. Method according to any of claims 1 to 3, **characterized in that** the pre-formed support body (2) consists of a plastic part, preferably produced by means of injection moulding.

6. Method according to any of claims 1 to 5, **characterized in that** the sealing element (6) consists of a PTFE compound.

## Patentansprüche

1. Verfahren für die Herstellung einer Dichtung (1), die ein Dichtungselement (6) und einen L-förmigen Tragkörper (2), der ein ringförmiges Element (15) und einen scheibenförmigen Flansch (16) besitzt, umfasst, wobei der Flansch (16) auf der von dem Element (15) weg weisenden Seite eine Stirnfläche (5) besitzt, wobei sich das Dichtungselement (6) an der Stirnfläche (5) befindet, wobei sich das Dichtungselement (6) an dem Tragkörper befindet, so dass ein erster Abschnitt (7) des Dichtungselements (6) eine dynamische Dichtungslippe bildet und ein zweiter Abschnitt (8) des Dichtungselements (6) eine statische Dichtung bildet, das die folgenden Schritte umfasst:
- Vorsehen eines vorgeformten L-förmigen Tragkörpers (2), der ein ringförmiges Element (15) und einen scheibenförmigen Flansch (16) besitzt, wobei der Flansch (16) auf der von dem Element (15) weg weisenden Seite eine Stirnfläche (5) besitzt,
- Anordnen des Körpers (2) in einer Form (16),
- Vorsehen eines Rohlings eines Dichtungselements (6), der einen ersten und einen zweiten Abschnitt (7, 8) besitzt, und Positionieren desselben an der Stirnfläche (5) des Tragkörpers (2),
- materielles Kleben des Dichtungselements (6) mit dem zweiten Abschnitt (8) an die Stirnfläche (5) durch Ausüben von Druck und gleichzeitig Einführen einer Reinigungsgeometrie (12) in den ersten Abschnitt (7) des Dichtungselements (6) durch Stanzen.

2. Verfahren nach Anspruch 1, **dadurch gekennzeichnet, dass** das Ausüben von Druck zusammen mit dem Einbringen von Wärme erfolgt.

3. Verfahren nach einem der Ansprüche 1 oder 2, **dadurch gekennzeichnet, dass** auf den Tragkörper (2) eine Klebstoffschicht (11) aufgebracht wird, bevor das Dichtungselement (6) durch Ausüben von Druck mit oder ohne Einbringen von Wärme angeklebt wird.

4. Verfahren nach einem der Ansprüche 1 bis 3, **dadurch gekennzeichnet, dass** der vorgeformte Tragkörper (2) aus einem gestanzten Metallteil besteht.

5. Verfahren nach einem der Ansprüche 1 bis 3, **dadurch gekennzeichnet, dass** der vorgeformte Tragkörper (2) aus einem Kunststoffteil besteht, das vorzugsweise durch Spritzguss hergestellt wird.

6. Verfahren nach einem der Ansprüche 1 bis 5, **dadurch gekennzeichnet, dass** das Dichtungselement (6) aus einem PTFE-Verbundstoff besteht.

## Revendications

1. Procédé de fabrication d'un joint d'étanchéité (1), comprenant un élément d'étanchéité (6) et un corps de support (2) en forme de L qui présente un élément annulaire (15) et une bride (16) en forme de disque, la bride (16) ayant une face d'extrémité (5) sur le côté opposé à l'élément (15), l'élément d'étanchéité (6) étant situé sur la face d'extrémité (5), l'élément d'étanchéité (6) étant situé sur le corps de support de telle sorte qu'une première section (7) de l'élément d'étanchéité (6) forme une lèvre d'étanchéité dynamique et qu'une deuxième section (8) de l'élément d'étanchéité (6) forme un joint d'étanchéité statique, comprenant les étapes suivantes :
- fournir un corps de support (2) en forme de L préformé ayant un élément annulaire (15) et une bride (16) en forme de disque, la bride (16) ayant une face d'extrémité (5) sur le côté opposé à l'élément (15),
- placer ledit corps (2) dans un moule (16),
- fournir une ébauche d'un élément d'étanchéité (6) comprenant une première et une deuxième section (7, 8) et positionner celle-ci sur la face d'extrémité (5) du corps de support (2),
- coller matériellement l'élément d'étanchéité (6) au niveau de la deuxième section (8) à la face d'extrémité (5) en appliquant une pression et en introduisant simultanément une géométrie de retenue (12) dans la première section (7) de l'élément d'étanchéité (6) par estampage.

2. Procédé selon la revendication 1, **caractérisé en ce que** l'application de pression a lieu avec l'application de chaleur.

3. Procédé selon l'une quelconque des revendications 1 ou 2, **caractérisé en ce qu'**une couche adhésive (11) est appliquée au corps de support (2) avant de coller l'élément d'étanchéité (6) à celui-ci en appliquant une pression, avec ou sans l'application de chaleur.

4. Procédé selon l'une quelconque des revendications 1 à 3, **caractérisé en ce que** le corps de support préformé (2) est constitué d'une pièce métallique estampée.

5. Procédé selon l'une quelconque des revendications 1 à 3, **caractérisé en ce que** le corps de support préformé (2) est constitué d'une pièce en plastique, de préférence produite au moyen de moulage par injection.

6. Procédé selon l'une quelconque des revendications 1 à 5, **caractérisé en ce que** l'élément d'étanchéité (6) est constitué d'un composé en PTFE.
